Europäisches Patentamt

European Patent Office

Office européen des brevets

(19)

(11) Publication number: **0 322 924**
**A1**

(12) # EUROPEAN PATENT APPLICATION

(21) Application number: **88121910.9**

(22) Date of filing: **30.12.88**

(51) Int. Cl.4: **B01D 53/14**

(30) Priority: **31.12.87 US 140127**

(43) Date of publication of application:
**05.07.89 Bulletin 89/27**

(84) Designated Contracting States:
**AT BE CH DE ES FR GB GR IT LI LU NL SE**

(71) Applicant: **UNION CARBIDE CORPORATION**
**39 Old Ridgebury Road**
**Danbury Connecticut 06817(US)**

(72) Inventor: **Thomas, James Charles**
**376 Lancaster Court**
**Piscataway New Jersey 08854(US)**
Inventor: **Kroposky, Peter John**
**R.D. 1 Box 260**
**Pittstown New Jersey 08867(US)**
Inventor: **Dibble, John Harold**
**Gilbert Lane**
**Putnam Valley New York 10579(US)**

(74) Representative: **Barz, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**D-8000 München 40(DE)**

(54) **Selective H2S removal from fluid mixtures using high purity triethanolamine.**

(57) Increased selective removal of hydrogen sulfide from fluid mixtures containing hydrogen sulfide and other fluids, such as carbon dioxide, is provided using aqueous solutions containing high purity triethanolamine.

EP 0 322 924 A1

## SELECTIVE $H_2S$ REMOVAL FROM FLUID MIXTURES USING HIGH PURITY TRIETHANOLAMINE

This invention pertains to fluid treatment, and more particularly to improved processes and compositions for selectively removing hydrogen sulfide ($H_2S$) from fluid mixtures containing $H_2S$.

Fluid treatment is required in many industrial operations including energy production, such as in the manufacture and use of fuels. Many fluid mixtures including fuels will often contain $H_2S$. The $H_2S$ must be removed from the fluid mixture prior to its combustion or other use to avoid the release of sulfur compounds, such as sulfur dioxide ($SO_2$), into the environment.

Processes and compositions for removing $H_2S$ from fluid mixtures containing $H_2S$ using solvents are known. These techniques are often complicated by the presence of other fluids in the mixture, such as carbon dioxide ($CO_2$), which often interfere with the $H_2S$ removal. For example, the efficiency of solvents used for $H_2S$ removal can be reduced by the solvent's affinity to co-absorb other fluids in the mixture, including $CO_2$.

Processes for the selective removal of $H_2S$ from fluid mixtures containing $H_2S$ have been developed, such as described in U.S. Patent No. 4,406,868 (Carter et al.), U.S. Patent No. 4,483,834 (Wood), U.S. Patent No. 4,678,648 (Wynn) and the patents cited or referred to in those patents.

Alkanolamines in general are well known solvents used in fluid treatment, including selective $H_2S$ removal, such as described in U.S. Patent No. RE 18,958 (Bottoms), U.S. Patent No. 2,161,663 (Baehr et al.) and U.S. Patent No. 4,483,834 (Wood). A variety of specific alkanolamines, used alone or in combination with other compounds, are also known, as for example described in U.S. Patent No. 4,508,692 (Savage et al.), U.S. Patent No. 4,532,118 (Tajiri et al.), U.S. Patent No. 4,545,965 (Gazzi et al.) and U.S. Patent No. 4,618,481 (Heinzelmann et al.). Specific alkanolamines used for selective removal of $H_2S$ from fluid mixtures containing $H_2S$ and $CO_2$ include methyldiethanolamine (MDEA), triethanolamine (TEA), diisopropanolamine (DIPA), and the like. MDEA is generally known as being the most selective for $H_2S$ and therefore characterized as the most preferred alkananolamine. For example, British Patent Specification No. 1,407,778 (Setlur et al.) describes a process for removing $H_2S$ from gases containing $H_2S$ also rich in $CO_2$ using tertiary alkanolamines, such as TEA and MDEA with MDEA most preferred. In addition, Vidaurri et al., in an article entitled "Recover $H_2S$ Selectively From Sour Gas Streams", Hydrocarbon Processing, November 1977, pages 333-337, describe the superiority of MDEA over other alkanolamines, including TEA, for selective removal of $H_2S$ from acid gases.

TEA is well known as a typical alkanolamine solvent useful in fluid treatment. Commercial grade TEA has been used alone or in combination with other components as a fluid treating solvent. The solubility of $H_2S$ and $CO_2$ in certified grade TEA solutions has been studied, as described in an article by Jou et al., entitled "Equilibria of $H_2S$ and $CO_2$ in Triethanolamine Solutions", The Canadian Journal of Chemical Engineering, Volume 63, February 1985, pages 122-125.

The use of alkanolamines for treating fluid mixtures containing $H_2S$ and having a large amount of $CO_2$ will often result in the co-absorption of a significant amount of $CO_2$ in the alkanolamine solvent. This co-absorbed $CO_2$ creates difficulties by reducing the efficiency of the alkanolamine to remove $H_2S$ as well as creating problems through increased costs for regenerating the alkanolamine and in the amount of alkanolamine required. High $CO_2$ co-absorption can also inhibit or prevent subsequent $H_2S$ processing, such as by interfering with recovered $H_2S$ being used subsequently, after desorption, in normal Claus plant operations. Furthermore, other benefits may be obtained by retaining the $CO_2$ in the treated fluid mixture. The $CO_2$ rich fluid may be applied in operations where $CO_2$ fluid mixtures are used, such as in enhancing certain oil recovery operations.

Complex alkanolamine compounds or combinations of alkanolamines with other compounds, such as physical solvents, have been used to increase $H_2S$ selectivity. These compositions, however are costly and add complexities to $H_2S$ removal operations. Modifications in procedures and apparatus for $H_2S$ removal having also been used to increase $H_2S$ selectivity. Such modifications, however, also add to the cost and complexity of $H_2S$ removal.

It would therefore be desirable to provide a simple process for increasing the selective removal of $H_2S$ from fluid mixtures containing $H_2S$ while minimizing the co-absorption of other fluids, such as $CO_2$, without increasing the cost or complexity of the $H_2S$ removal operation.

Processes and compositions are provided for selectively removing $H_2S$ from fluid mixtures containing $H_2S$, and optionally $CO_2$, by treating the fluid mixture with an aqueous solution containing high purity TEA (HPTEA).

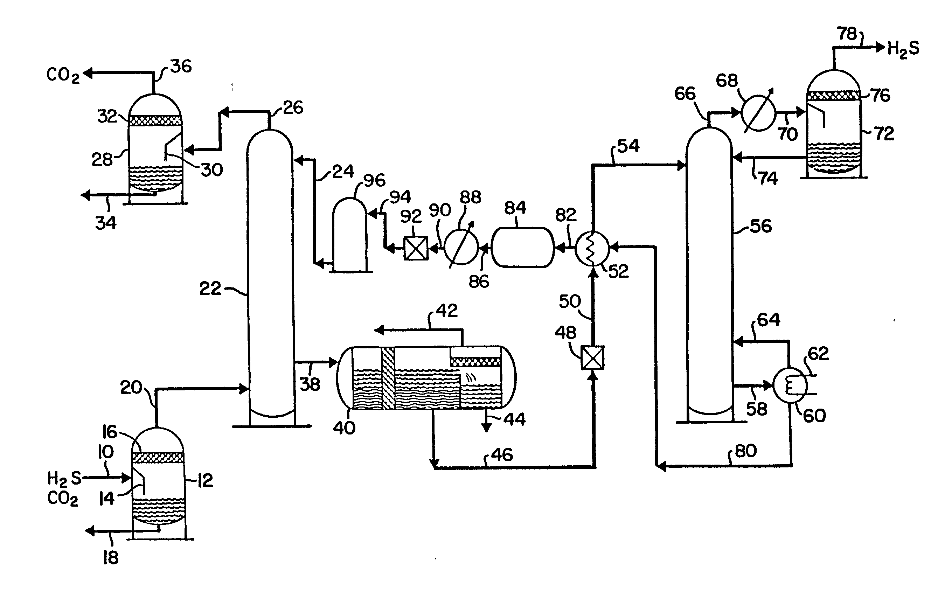

In the drawing, the figure is a schematic flow plan illustrating an absorption-regeneration apparatus useful for selective $H_2S$ removal from fluid mixtures containing $H_2S$.

This invention provides a simple and efficient procedure for increasing the selective removal of $H_2S$ from fluid mixtures containing $H_2S$, such as those containing a significant amount of $CO_2$. This improvement may be accomplished without costly or complex modifications of $H_2S$ removal procedures or apparatus and without using costly or exotic fluid treating compositions.

Fluid mixtures which may be treated include any fluid mixtures containing $H_2S$, whether of natural or synthetic origin, for which the selective removal of $H_2S$ is desired. Fluid mixtures containing $H_2S$ are well known and may contain one or more other fluids, such as those typically found in industrial acid gas compositions. The fluid mixtures may be gaseous or liquid, and are preferably gas mixtures. Typical fluid mixtures may contain, in addition to $H_2S$, one or more of the following: $CO_2$; carbon disulfide; hydrocyanic acid; carbonyl sulfide; oxygen and sulfur derivatives of lower hydrocarbons; mercaptans; saturated or unsaturated hydrocarbons, including lower or long chain alkanes or alkenes or aromatic compounds, such as methane, ethane, propane, butane, benzene, naphthalene and so on; hydrogen; nitrogen; inert gases such as helium or argon; as well as other acid or nonacid fluids. Illustrative fluid mixtures include, but are not limited to, the following: fuel gas such as natural gas, refinery gas, coke oven gas, sour $CO_2$, Claus plant tail gas; synthesis gas; and the like.

The amount and relative proportions of $H_2S$ and other fluids in the fluid mixture is not critical. The amount of $H_2S$ may range from greater than 0 up to less than 100, and typically from about 0.001 to about 50, mole percent of the fluid mixture with the remainder being the other fluids in the mixture. When $CO_2$ is present, the fluid mixture may contain from greater than 0 up to less than 100, and typically from about 0.1 to about 99.99, mole percent $CO_2$. In addition to $H_2S$ and $CO_2$, the fluid mixture may also contain up to less than 100, and typically from 0 to about 99.99, mole percent of one or more other fluids. The relative mole ratio of $H_2S$ to other fluids in the mixture, including any $CO_2$, is not critical but may range from greater than 0 up to about 99:1 and typically from about 0.001:99.99 to about 50:50.

Alkanolamines, including TEA, generally contain not just the designated compound but include other compounds which are typically by-products made when the alkanolamine is manufactured. The term "high purity" as used in this invention pertains to TEA material containing a measurably higher concentration of TEA than the concentration of TEA typically found in commercial grade TEA. Commercial grade TEA typically contains up to about 15 weight percent compounds other than TEA, predominantly diethanolamine (DEA) and monoethanolamine (MEA). The HPTEA will typically have greater than about 90, and preferably from about 95 to about 100, weight percent TEA. Any impurities which may be present in the HPTEA are not critical and may include the compounds typically found in commercial grade TEA.

HPTEA may be provided using well known procedures, such as by purification of commercial grade TEA or by more efficient production of TEA. Analytical grade, i.e. certified, TEA may also be used as HPTEA. HPTEA may be provided from any source and used per se or may be provided in combination with commercial grade TEA so long as the combination contains an increased proportion of TEA when compared to typical, commercial grade TEA.

The term "$H_2S$ selectivity" as used in this invention pertains to either or both (1) increasing the efficiency for absorbing $H_2S$ or (2) reducing the amount of other fluids, such as $CO_2$, which may be co-absorbed. $H_2S$ selectivity can be determined using well established techniques. For example, a measure of $H_2S$ selectivity can be based on the reduction in the amount of $CO_2$ co-absorbed in the aqueous solution, or conversely by measuring an increase in the $CO_2$ level retained in the fluid mixture. $H_2S$ selectivity can also be determined based on increased absorption efficiency, which can be demonstrated by a reduction in the circulation rate of the TEA solution as compared to a higher circulation rate required to maintain equivalent performance using another fluid treating solvent. $H_2S$ selectivity based on absorption efficiency can also be determined by measuring a reduction in the regeneration energy requirement for the HPTEA solution, as compared to the energy requirements using another fluid treating solvent.

The degree of purity of the HPTEA may be characterized in terms of its performance in fluid treatment. The purity of the HPTEA is that which is an effective amount sufficient to provide dramatically increased $H_2S$ selectivity compared to the use of commercial grade TEA. The HPTEA will provide increased $H_2S$ selectivity even when compared to $H_2S$ selectivity provided under the same conditions except that the HPTEA is replaced with an equivalent molar amount of MDEA. The degree of increase in $H_2S$ selectivity provided by the HPTEA is not narrowly critical. Typically, an increase in $H_2S$ selectivity of at least about 10, and preferably from about 30 to about 50, percent as compared to the $H_2S$ selectivity using MDEA instead of the HPTEA, is provided.

The HPTEA is provided in aqueous solution. The aqueous solution consists essentially of water and HPTEA. The concentration of HPTEA in solution is not narrowly critical. The amount of HPTEA in solution may range from about 1 to about 90, typically from about 10 to about 80, and preferably from about 40 to about 55, weight percent.

3

EP 0 322 924 A1

The HPTEA solution may optionally contain one or more additional fluid treating solvents. The particular fluid treating solvent which may be provided is not critical but may be selected from any desired or known fluid treating solvent. Typical fluid treating solvents include, but are not limited to, one or more of the following: MDEA, DEA, TEA, DIPA and the like. Preferably, the additional fluid treating solvent is selective to $H_2S$, such as MDEA. The amount of optional fluid treating solvent is not critical but may range from 0 up to about 95, and preferably from 0 up to about 10, weight percent as compared to the total weight of HPTEA and additional fluid treatment solvent provided. In a preferred embodiment, the aqueous solution contains about 90 weight percent HPTEA and about 10 weight percent MDEA, based on the total weight of HPTEA and MDEA present.

The HPTEA solution may be provided alone or in combination with one or more other compounds used in fluid treatment following well known practices. Illustrative compounds which may optionally be provided include, but are not limited to, one or more of the following: antifoaming agents; physical solvents including glycols and the mono- and di-ethers or esters thereof, aliphatic acid amides, N-alkylated pyrrolidones, sulfones, sulfoxides and the like; antioxidants; corrosion inhibitors; film formers; chelating agents such as metals; pH adjusters such as alkali compounds; and the like. The amount of these optional components is not critical but may be provided in an effective amount following known practices.

The fluid treatment operation conditions are not critical but may be selected from any procedures useful for selectively removing $H_2S$ from fluid mixtures including well known procedures. The treatment involves contacting the fluid mixture with the HPTEA solution in any suitable apparatus under any suitable condition for the selective removal of $H_2S$ to occur. Typically, the fluid mixture and HPTEA solution are passed through a vessel, such as an absorber, in opposite directions and the $H_2S$ is transferred, through absorption, from the fluid mixture to the HPTEA solution. The HPTEA solution is described as being lean in $H_2S$ before absorption and as rich in $H_2S$ after absorption. The rich HPTEA solution is then typically regenerated by passing through another vessel, such as a stripper, where a drop in pressure and the application of heat enables the $H_2S$ to be desorbed, i.e. stripped, from the rich HPTEA solution, to produce lean HPTEA solution which may then be recycled for reuse.

The following represents a typical embodiment and is illustrated in the Figure. This embodiment is illustrative of fluid treatment wherein the fluid which is treated is typically a gas mixture. Variations may be provided when the fluid mixture being treated is liquid instead of gas following well known procedures.

A fluid mixture, such as sour gas, containing $H_2S$ and other gases, such as $CO_2$, may be introduced through line 10 into an inlet separator 12 which may remove entrained droplets or slugs of liquid or other contaminants from the fluid mixture. Impaction devices 14, baffles and mist eliminator pads 16 may be used to remove such contaminants including, for example, liquid hydrocarbons, salt water, sands, well treating compounds, pipeline treating chemicals, compressor oils and the like. The entrained liquids and contaminants may be collected and removed through line 18.

The fluid mixture may then pass through line 20 to an absorber 22. The absorber 22 may contain contacting means such as trays, packed beds or other contact devices which provide intimate contact between the fluid mixture and the HPTEA solution, which may be introduced into the absorber 22 through line 24. When trays are used, the level of the HPTEA solution typically may be maintained on each tray by a weir or similar device to a height of two or three inches. The fluid mixture may be introduced into the lower section of the absorber 22 and pass to the top of the absorber 22. The HPTEA solution may be introduced into the upper portion of the absorber 22 and pass to the bottom of the absorber 22 countercurrently to the fluid mixture.

When trays are used, the fluid mixture may pass up from underneath the trays through openings in the trays such as perforations, bubble caps or valves and dispersed into bubbles through the liquid in the trays forming a froth. The fluid mixture disengages from the froth and travels through a vapor space above the trays providing time for entrained solution to fall back down to the liquid on the tray before passing up to the next tray. When using packed columns, the HPTEA solution may be dispersed in the fluid mixture by forming a film over the packing providing a large surface area for the $H_2S$ to transfer from the fluid mixture to the HPTEA solution.

The amount of $H_2S$ removed depends upon the number of trays or height of packing used in the absorber 22. Up to twenty trays or the equivalent height of packing are typical and often of standard design. The top two to five trays at the top of the absorber 22 may be used as a water wash to minimize TEA losses through vaporization. A mist eliminator pad may be installed near the top of the absorber 22 to trap entrained solution.

The treated, commonly referred to as "sweetened", fluid mixture may pass through line 26 to an outlet separator 28. The outlet separator 28 may remove any entrained HPTEA solution using impaction devices 30 and mist eliminator pads 32. The entrained HPTEA solution may be collected and removed through line

4

34 and recycled for further use. The treated fluid mixture may exit through line 36 for further use or processing.

The rich HPTEA solution may exit the absorber 22 through line 38 and pass to a flash tank separator 40. The flash tank separator 40 may recover any hydrocarbons that are dissolved or condensed in the HPTEA solution while in the absorber 22. The pressure of the HPTEA solution may be dropped as it enters the flash tank separator 40 to enable the lightest hydrocarbons to flash from solution and then be removed through line 42. The heavier hydrocarbons remain as a liquid but separate from the HPTEA solution forming an upper liquid layer which may be skimmed off the top and removed through line 44. The HPTEA solution may exit the flash tank separator 40 through line 46 and pass through a mechanical filter 48, such as a cartridge or precoat filter, to remove any particulates.

The HPTEA solution may then pass through line 50 to a heat exchanger 52 to pick up heat from lean HPTEA solution before being passed through line 54 to a stripper 56.

The rich HPTEA solution may be introduced into the upper portion of the stripper 56 which may be provided with trays, packing or other contact devices. To minimize HPTEA loss through vaporization, the top of the stripper 56 may have a water wash section of up to four to six trays or equivalent packing. The HPTEA solution may flow down through the stripper 56 countercurrent to a gas stream of water vapor and $H_2S$, and any other fluid such as $CO_2$, which has been stripped from the HPTEA solution. Lean HPTEA solution may exit the stripper 56 through line 58 and pass to a reboiler 60. The reboiler 60 may have an internal heat source 62 which vaporizes a portion of the HPTEA solution, primarily water, which may then pass through line 64 to the lower portion of the stripper 56 to assist fluid stripping.

The stripped fluid may exit the top of stripper 56 and pass through line 66 to a condenser 68 used to recover water and any HPTEA lost through vaporization in the stripper 56. Water and condensed HPTEA may pass through line 70 to an accumulator 72 for collection and recycling through line 74 to the stripper 56. The recovered $H_2S$ may pass through mist eliminator pads 76 and exit the top of the accumulator 72 and through line 78 for disposal or further use, such as in Claus or Stretford conversion units.

Lean HPTEA solution from the reboiler 60 may pass through line 80 to heat exchanger 52 where heat may be transferred to the rich HPTEA solution as described previously. The lean HPTEA solution may then pass through line 82 to a surge tank 84 which is used to vent excess or supply additional HPTEA solution to the unit. The HPTEA solution may then pass through line 86 to cooler 88 to remove any more heat from the HPTEA solution as may be required. The HPTEA solution may then pass through line 90 to a mechanical filter 92 to remove particulates. The HPTEA solution may then pass through line 94 to a carbon filter 96 to remove both particulates and chemical contaminants. The HPTEA solution may then be recycled through line 24 for reuse as discussed previously.

The invention provides the advantage of increasing $H_2S$ selectivity, not only with respect to the use of commercial grade TEA, but with respect to more preferred alkanolamines including MDEA. Although not bound to any particular theory, it is believed that increased $H_2S$ selectivity is a consequence of reducing the presence of primary and secondary amines such as MEA and DEA, respectively. The elimination or reduction of primary or secondary amines reduces the amount of co-absorption of other fluids, such as $CO_2$, through reaction between the other fluid and hydrogen on the primary or secondary amine nitrogen atoms. Surprisingly, it was discovered that the $H_2S$ selectivity provided by HPTEA surpasses the $H_2S$ selectivity of MDEA.

The following examples are presented as illustrative embodiments only and are not intended to limit the scope of this invention.

## EXAMPLES

The abbreviated terms and designations used in the examples are described as follows:

| Designation | Description |
|---|---|
| gpm<br>m/m | Gallons per minute<br>Moles of absorbed $CO_2$ and $H_2S$ per mole of amine solvent |
| Designation | Description |
| MMSCFD<br>ppmv<br>psig | Million standard cubic feet per day<br>Parts per million, volume<br>Pounds per square inch, gauge |

Examples 1-4 and A-B; Laboratory Tests

These examples measure and compare the $H_2S$ selectivity of various solvent solutions.

The feed gas consists of 1.5 mole percent $H_2S$, 30 mole percent $CO_2$ and the balance nitrogen.

The gas is fed from a supply cylinder to a heat exchanger which heats the gas to a constant temperature of about 40° C. The gas is then fed through a flow meter, maintaining a flow rate of 500 cc/min. The gas mixture passes to the bottom of an absorber. The absorber is made of glass and contains 40 perforated glass trays approximately one inch in diameter with each tray spaced one inch apart. A glass downcomer is positioned between each tray allowing excess solvent to pass between trays to maintain an even solvent height on each tray.

The designated solvent is fed to the top of the column from a reservoir using a pump. The gas flows up within the column contacting the solvent flowing down the column. The pressure within the column is approximately atmospheric.

Rich solvent, containing absorbed $H_2S$ and $CO_2$, exits the bottom of the column and is transferred, using a pump, to a 500 ml buret. The $H_2S$ and $CO_2$ concentrations in the effluent gas is measured using a Draeger tube.

The results of these examples are set forth in Table 1. The results demonstrate that substitution of MDEA with HPTEA, either in whole or in part, increases $H_2S$ selectivity. This is demonstrated with comparable solvent circulation rates as well as reduced solvent circulation rates providing comparable or even increased $H_2S$ absorption.

TABLE 1

| LABORATORY DATA | | | | |
|---|---|---|---|---|
| Example | Aqueous Solvent (wt. %) | Solvent Circulation Rate (ml/min) | Treated Gas $H_2S$ Content (ppm) | Treated Gas $CO_2$ Content (Volume %) |
| A | 50% MDEA | 9.35 | 60 | 15.00 |
| 1 | 30% MDEA/ | 9.25 | 50 | 17.25 |
| | 20% HPTEA | 7.00 | 60 | 18.25 |
| 2 | 20% MDEA/ | 9.45 | 45 | 18.50 |
| | 30% HPTEA | 7.25 | 50 | 19.00 |
| | | 4.75 | 60 | 21.00 |
| 3 | 10% MDEA/ | 9.25 | 20 | 20.00 |
| | 40% HPTEA | 4.80 | 40 | 21.00 |
| B | 50% MDEA | 9.20 | 20 | 14.00 |
| 4 | 50% HPTEA | 9.25 | 5 | 21.00 |
| | | 4.50 | 22 | 25.00 |

Examples 5-12 and C-K; Plant Tests

In these examples, the $H_2S$ selectivity of various gas mixtures is measured and compared using various solvents under varying conditions in a plant scale operation. The apparatus is similar to that shown in the Figure and includes the use of an absorber, stripper, reboiler, accumulator, heat exchanger and solvent filters. The specific operating conditions are designated in Table 2. The absorber contains the designated number of single pass valve trays having a diameter of 30 inches. The trays are spaced 24 inches apart and have a weir height of 2 1/2 inches. The design circulation rate of solvent in the system is 60 gpm. A gas mixture containing the designated mole percent of $CO_2$ and $H_2S$ is fed at the designated volume, temperature and pressure to the bottom of the absorber. The designated solvent is fed at the designated circulation rate and at the designated lean temperature to the designated tray of the absorber, counting tray number one as the bottom tray. The gas mixture passes up through the absorber countercurrently to the solvent passing down through the column across the designated number of trays. The treated gas mixture exits the top of the absorber at the designated gas out temperature. The rich solvent exits the bottom of the absorber at the designated temperature and passes through a heat exchanger at the designated in and out temperatures before being introduced to the stripper. The stripped $H_2S$ gas, and any other stripped fluid such as $CO_2$, exits the stripper at the designated temperature and passes, at the designated temperature, to an accumulator at the designated pressure. Well regenerated lean solvent, containing less than 0.01 m/m $H_2S$ and $CO_2$, passes from the reboiler through heat exchangers, at the designated in and out temperatures, and is reintroduced to the absorber at the designated temperature.

The concentration of $H_2S$ and $CO_2$ is measured in the gas mixture introduced to and exiting from the absorber. The relative percentage of $CO_2$ exiting from the absorber as a percentage $CO_2$ entering the absorber, i.e. $CO_2$ slipped, is calculated. Samples of lean solvent are taken and the concentration of HPTEA and MDEA in active form is measured and calculated using standard procedures. The concentration of $H_2S$ and $CO_2$ in the rich solvent, i.e. rich m/m loading, and $H_2S$ and $CO_2$ equilibrium approaches are calculated based on an equivalent weight percent of MDEA only.

The results are set forth in Table 2. The plant test results demonstrate that increased $H_2S$ selectivity is provided by the solvent containing HPTEA. The results demonstrate this increased $H_2S$ selectivity is provided over a range of operating conditions, including variations in temperature, solvent circulation rate, gas mixture concentrations and so on.

## TABLE 2

### PLANT TEST DATA

| Example | C | D | E | F | G | H | I | J | K |
|---|---|---|---|---|---|---|---|---|---|
| Solvent | MDEA | MDEA | MDEA | MDEA | MDEA | MDEA | MDEA | MDEA | MDEA |
| **Fluid Mixture:** | | | | | | | | | |
| Volume (MMSCFD) | 1.5 | 1.2 | 1.3 | 1.4 | 2.4 | 2.50 | 2.54 | 2.49 | 2.32 |
| Temperature (°F) | 87 | 62 | 66 | 80 | 104 | 86 | 90 | 94 | 78 |
| Pressure (psig) | 210 | 208 | 210 | 210 | 212 | 214 | 215 | 225 | 214 |
| $CO_2$ Slipped (%) | 44.3 | 38.3 | 37.1 | 44.5 | 51.4 | 60.2 | 62.6 | 61.9 | 56.4 |
| $CO_2$ in (vol. %) → $CO_2$ out (vol. %) | 3.3→1.5 | 3.3→1.3 | 3.4→1.3 | 3.5→1.6 | 3.8→2.0 | 8.3→5.2 | 8.9→5.8 | 9.0→5.8 | 11.7→7.0 |
| $H_2S$ in (vol. %) → $H_2S$ out (ppmv) | 40.81→0 | 0.77→0 | 0.83→0 | 0.77→0 | 0.45→0 | 0.59→1 | 0.59→2 | 0.59→3 | 0.63→3 |
| **Absorber:** | | | | | | | | | |
| Trays | 12 | 12 | 12 | 12 | 12 | 12 | 12 | 12 | 12 |
| Circulation Rate (gpm) | 27.5 | 26.8 | 23.0 | 16.3 | 21.4 | 21.4 | 24.3 | 23.1 | 31.3 |
| Lean Temperature (°F) | 91 | 84 | 85 | 96 | 96 | 94 | 109 | 112 | 100 |
| Rich Bottom Temperature (°F) | 98 | 88 | 90 | 105 | 110 | 114 | 123 | 127 | 117 |
| Gas Out Temperature (°F) | 90 | 80 | 82 | 96 | 98 | 96 | 109 | 113 | 78 |
| Stripper Bottom Pressure (psig) | 12.8 | 12.5 | 12.5 | 12.7 | 10.1 | 10.8 | 10.5 | 11.5 | 9.6 |
| Reboiler Temperature (°F) | 235 | 237 | 235 | 237 | 234 | 235 | 235 | 235 | 235 |
| Accumulator Pressure (psig) | 8.5 | 8.0 | 7.8 | 7.8 | 8.0 | 9.0 | 8.9 | 8.0 | 7.3 |
| Stripper Overhead Temperature (°F) | 218 | 221 | 220 | 210 | 220 | 217 | 220 | 220 | 215 |
| **Heat Exchanger:** | | | | | | | | | |
| Lean In Temperature (°F) | 235 | 237 | 235 | 237 | 234 | 235 | 235 | 235 | 235 |
| Lean Out Temperature (°F) | 148 | 144 | 140 | 147 | 147 | 150 | 157 | 157 | 155 |
| Rich In Temperature (°F) | 100 | 92 | 93 | 106 | 110 | 115 | 126 | 130 | 120 |
| Rich Out T (°F) | 187 | 185 | 183 | 187 | 190 | 193 | 195 | 195 | 195 |
| Amine (wt %) | 28.6 | 27.8 | 27.8 | 27.8 | 28.2 | 28.1 | 28.1 | 28.4 | 31.4 |
| Rich Loading (m/m) | 0.14 | 0.12 | 0.16 | 0.22 | 0.24 | 0.42 | 0.38 | 0.39 | 0.35 |
| Rich $H_2S$ Equilibrium Approach | 0.12 | 0.09 | 0.12 | 0.22 | 0.25 | 0.45 | 0.42 | 0.46 | 0.27 |
| Rich $CO_2$ Equilibrium Approach | 0.16 | 0.14 | 0.18 | 0.28 | 0.35 | 0.53 | 0.51 | 0.54 | 0.44 |

EP 0 322 924 A1

TABLE 2 (Continued)

PLANT TEST DATA

| Example | 5 | 6 | 7 | 8 | 9 | 10 | 11 | 12 |
|---|---|---|---|---|---|---|---|---|
| Solvent | MDEA/ HPTEA[a] | MDEA/ HPTEA[a] | MDEA/ HPTEA[a] | MDEA/ HPTEA[a] | MDEA/ HPTEA[a] | MDEA/ HPTEA[a] | MDEA/ HPTEA[b] | MDEA/ HPTEA[b] |
| **Fluid Mixture:** | | | | | | | | |
| Volume (MMSCFD) | 2.5 | 2.15 | 2.00 | 2.45 | 2.50 | 2.41 | 2.38 | 2.39 |
| Temperature (°F) | 90 | 90 | 68 | 74 | 76 | 76 | 94 | 76 |
| Pressure (psig) | 214 | 213 | 214 | 212 | 211 | 213 | 212 | 215 |
| $CO_2$ Slipped (%) | 70.3 | 73.0 | 70.7 | 78.8 | 72.0 | 70.2 | 81.4 | 65.0 |
| $CO_2$ in (vol. %) → $CO_2$ out (vol. %) | 12.0→8.8 | 8.0→6.0 | 9.3→6.8 | 11.9→9.7 | 12.0→9.0 | 12.0→8.8 | 13.3→11.2 | 13.4→9.2 |
| $H_2S$ in (volume %) → $H_2S$ out (ppmv) | 0.59→2 | 0.55→0 | 0.61→0 | 0.78→1 | 0.66→3 | 0.71→0 | 0.85→4 | 0.71→1 |
| **Absorber:** | | | | | | | | |
| Trays | 12 | 12 | 12 | 12 | 12 | 12 | 12 | 20 |
| Circulation Rate (gpm) | 31.3 | 31.3 | 29.5 | 31.7 | 31.7 | 34.6 | 31.7 | 31.7 |
| Lean Temperature (°F) | 110 | 104 | 90 | 93 | 100 | 117 | 111 | 113 |
| Rich Bottom Temperature (°F) | | 112 | 98 | 103 | 112 | 121 | 121 | 125 |
| Gas Out Temperature (°F) | | 103 | 86 | 93 | 100 | 110 | 106 | 110 |
| Stripper Bottom Pressure, (psig) | | 13.5 | 11.9 | 12.6 | 12.4 | 12.2 | 12.8 | 12.8 |
| Reboiler Temperature, (°F) | | 235 | 233 | 235 | 235 | 235 | 235 | 235 |
| Accumulator Pressure (psig) | | 7.8 | 7.2 | 7.9 | 8.0 | 7.8 | 8.4 | 7.2 |
| Stripper Overhead Temperature (°F) | | 222 | 220 | 218 | 215 | 215 | 220 | 218 |
| **Heat Exchanger:** | | | | | | | | |
| Lean In Temperature (°F) | | 235 | 233 | 235 | 235 | 235 | 235 | 235 |
| Lean Out Temperature (°F) | | 150 | 139 | 142 | 145 | 157 | 155 | 155 |
| Rich In Temperature (°F) | | 114 | 99 | 104 | 114 | 125 | 123 | 127 |
| Rich Out Temperature (°F) | | 195 | 185 | 187 | 188 | 193 | 192 | 190 |
| Amine (wt %) | 34.0 | 36.6 | 37.4 | 34.1 | 34.3 | 34.5 | 42.6 | 42.3 |
| Rich Loading (m/m) | 0.25 | 0.14 | 0.16 | 0.20 | 0.24 | 0.23 | 0.16 | 0.25 |
| Rich $H_2S$ Equilibrium Approach | 0.23 | 0.13 | 0.17 | 0.17 | 0.20 | 0.21 | 0.18 | 0.23 |
| Rich $CO_2$ Equilibrium Approach | 0.32 | 0.17 | 0.19 | 0.19 | 0.28 | 0.29 | 0.18 | 0.34 |

a – Aqueous solution of HPTEA and MDEA in a weight ratio of 6.57:1 HPTEA to MDEA.

b – Aqueous solution of HPTEA and MDEA in a weight ratio of 8.75:1 HPTEA to MDEA.

## Claims

1. A process for selectively removing hydrogen sulfide from fluid mixtures containing hydrogen sulfide which comprises treating a fluid mixture containing hydrogen sulfide with an aqueous solution containing high purity triethanolamine.

2. The process of claim 1 which provides increased hydrogen sulfide selectivity when compared with the use of an equivalent molar amount of methyldiethanolamine in place of the high purity triethanolamine.

3. The process of claim 1 wherein the high purity triethanolamine has a purity in excess of the typical purity of commercial grade triethanolamine.

4. The process of claim 3 wherein the high purity triethanolamine has a purity of at least about 90 weight percent, preferably about 95 to 100 weight percent.

5. The process of any one of claims 1 to 4 wherein the aqueous solution contains another fluid treating solvent, such as methyldiethanolamine.

6. The process of claim 5 wherein the aqueous solution contains up to 95 weight percent of the other solvent.

7. The process of claim 6 wherein the aqueous solution contains about 90 weight percent high purity triethanolamine and about 10 weight percent methyldiethanolamine.

8. The process of any one of claims 1 to 7 wherein the fluid mixture contains one or more other fluids selected from carbon dioxide, carbon disulfide, hydrocyanic acid, carbonyl sulfide, oxygen and sulfur derivatives of lower hydrocarbons, mercaptans, hydrocarbons, hydrogen, nitrogen, oxygen and inert gases.

9. A fluid treatment composition containing an effective amount of high purity triethanolamine solution providing increased selectivity for hydrogen sulfide from fluid mixtures containing hydrogen sulfide as compared to the selectivity for hydrogen sulfide provided by an equivalent molar amount of methyldiethanolamine in place of the high purity triethanolamine.

10. The composition of claim 9 wherein the high purity triethanolamine has a purity in excess of the typical purity of commercial grade triethanolamine.

11. The composition of claim 10 wherein the high purity triethanolamine has a purity of at least about 90 weight percent, preferably about 95 to 100 weight percent.

12. The composition of any one of the claims 9 to 11 wherein the aqueous solution contains another fluid treating solvent, such as methyldiethanolamine.

13. The composition of claim 12 wherein the aqueous solution contains up to 95 weight percent of the other solvent.

14. The composition of claim 13 wherein the aqueous solution contains about 90 weight percent high purity triethanolamine and about 10 weight percent methyldiethanolamine.

CO₂ — 36

32

28 — 30

34

26

24  96

94

92  90  88  84  82

86

22

42

50

48

40  44

46

16  10

H₂S  14  12

CO₂

18

78  → H₂S

66  68

76

70  72

54

74

56

64

62

58  60

80

EP 0 322 924 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | WO-A-8 605 474  (R.M. PARSONS CO.)<br>* Claims 1,4 * | 1-3,5,8<br>,12 | B 01 D  53/14 |

TECHNICAL FIELDS SEARCHED (Int. Cl.4)

B 01 D

The present search report has been drawn up for all claims

| Place of search | Date of completion of the search | Examiner |
|---|---|---|
| THE HAGUE | 22-02-1989 | BOGAERTS M.L.M. |

EPO FORM 1503 03.82 (P0401)